# EUROPEAN PATENT SPECIFICATION

(11) **EP 0 346 949 B1**
(45) Date of publication and mention of the grant of the patent: **09.06.1993**
(21) Application number: 89115220.9
(22) Date of filing: 06.03.1986
(51) Int. Cl.: B65D 1/02, B65D 23/10

(54) **Biaxial-orientation blow-moulded bottle-shaped container**
Biaxial orientierter geblasener flaschenförmiger Behälter
Récipient en forme de bouteille moulé par soufflage à orientation biaxiale

(30) Priority: 17.04.1985 JP 57180/85; 04.10.1985 JP 152099/85; 04.10.1985 JP 152100/85
(43) Date of publication of application: 20.12.1989
(62) Divisional of application: 86301601.0
(73) Proprietor: Yoshino Kogyosho Co., Ltd., Tokyo 136 (JP)
(72) Inventor: Ota, Akiho, Koto-Ku Tokyo (JP); Siguira, Hiroaki, Koto-Ku Tokyo (JP); Ishii, Hiroichi, Koto-Ku Tokyo (JP)
(74) Representative: Heath, Derek James

(56) References cited:
- EP-A- 0 033 745
- BE-A- 714 017
- GB-A- 614 859
- US-A- 1 602 391
- US-A- 3 537 498
- US-A- 4 308 955

## Description

This invention relates to a blow-moulded bottle-shaped container of biaxially-oriented synthetic resin such as polyethylene terephthalate resin.

Recently, bottle-shaped containers of relatively large size for containing liquids such as, for example, liquors or soy sauces have been widely utilized.

The most effective means for moulding a bottle-shaped container of this type include means for moulding the bottle-shaped container by biaxially orientation blow-moulding a preformed parison moulded from a synthetic resin material. Particularly, a blow-moulded bottle-shaped container of biaxially-oriented polyethylene terephthalate resin has a number of advantages such as a light weight, excellent mechanical strength and physical properties, an inexpensive cost together with the possibility of mass production.

Since the blow-moulded bottle-shaped container of biaxially-oriented synthetic resin of this type has a smooth surface and is moulded in a relatively large size, the bottle-shaped container tends to slip when held by a hand and must therefore be provided with a grip which is separately moulded as a holding means of the container body.

In order to obviate this difficulty of holding the conventional bottle-shaped container, axially slender recesses have been manufactured at both sides of a cylindrical body of the bottle-shaped container so as to utilize the rear halves of the container body as a grip.

The above-mentioned conventional bottle-shaped container is certainly convenient to handle but does not always have sufficient mechanical strength. More specifically, the conventional bottle-shaped container of this type exhibits a serious drawback in that, when the conventional bottle-shaped container is dropped in the state where a predetermined quantity of liquid is filled in the container body to conduct a strength test, the slender recesses formed on the body of the bottle-shaped container are externally projected and are deformed by the internal pressure of the liquid container in the container body by the dropping impact, resulting in no recovery of the deformation.

Further, this external projecting deformation of the recesses on the body of the conventional bottle-shaped container means insufficient buckling strength of the recesses formed on the container body, whereas the bottle-shaped container is desired to provide high mechanical strength.

Accordingly, it is an aim of this invention to provide a blow-moulded bottle-shaped container of biaxially oriented synthetic resin which can eliminate the drawbacks and inconvenience of the conventional bottle-shaped container described above and can enhance sufficiently the mechanical strength of the recesses formed on the container body by providing reinforcing ribs for effectively dispersing the internal pressure acting on the recesses. This aim is achieved by the container of claim 1.

The foregoing aim and other aims, as well as the characteristic features of the invention, will become more fully apparent and more readily understandable by the following description and the appended claims when read in conunction with the accompanying drawings, in which :
Fig. 1 is a side view of an embodiment of a blow-moulded bottle-shaped container according to the invention; and
Fig. 2 is a sectional view taken along the line II-II in Fig. 1.

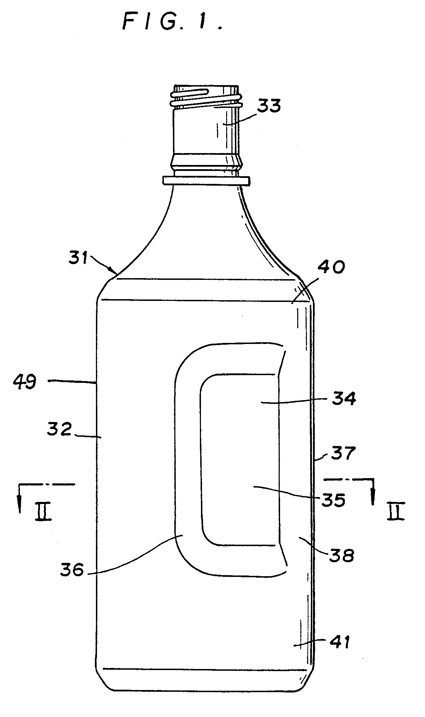

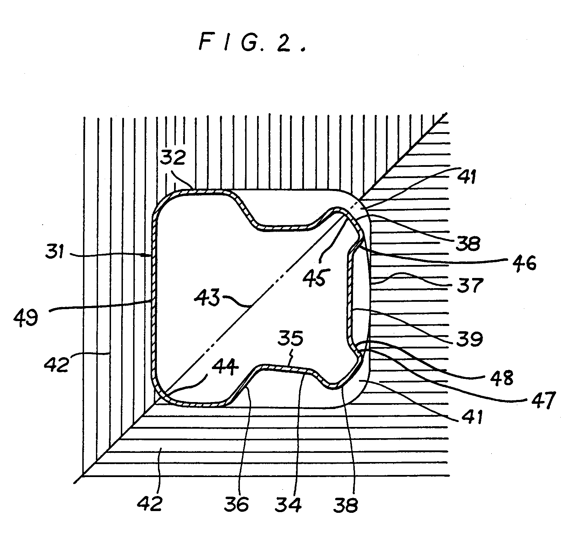

Figs. 1 and 2 show an embodiment of a bottle-shaped container of the invention. A bottle-shaped container is fabricated by filling a preformed parison in a moulding cavity formed in a pair of moulds and biaxial-orientation blow-moulding the preformed parison. Recesses are formed at the centre of the container body, while the clamping or separating direction of the moulds is in a direction perpendicularly crossing the side of the bottle-shaped container body which is moulded to have a rectangular lateral cross-sectional shape. Thus, a parting line formed on the moulded bottle-shaped container is formed from the front surface and the back surface of the bottle-shaped container to the bottom.

However, in the bottle-shaped container of this type, an indication of its contents must be put on any of the positions on the surface of the bottle-shaped container so that the position is always on the front surface of the bottle-shaped container in order to be particularly noticeable. The indicating means normally include a label, printed as required and bonded on the bottle-shaped container, or printed directly on the container body surface. In this case as described above, the parting line is formed on the front surface of the bottle-shaped container. Thus, it has such drawbacks that, when the label is bonded, a wrinkle might be formed, or the printing might not be effectively achieved. Further, according to the configuration of this bottle-shaped container, it is impossible to provide the reinforcing rib grooves on the back surface of the grip due to the separating direction of the mould, and thus the mechanical strength of the grip remains insufficient.

Then, it might be considered advantageous to form the parting line along the edge line of the bottle-shaped container having a rectangular lateral cross-sectional shape so as eliminate the problem of having to bond the label, but if a pair of opposite recesses are formed at the centre of the body of the bottle-shaped container and the grip remains to be formed on the rear half, the upper and lower portions of the rear half of the container body are externally projected from the grip so that; when the moulded bottle-shaped container is removed from the blowing mould, the grip engages therewith, with the result that the bottle-shaped container cannot be conveniently removed from the moulds.

The difficulty of separating the moulded bottle-shaped container from the moulds further increases if the reinforcing rib grooves are formed on part of the grip as described above.

In the embodiment shown in the accompanying drawings, a parting line is formed along the edge line of a bottle-shaped container having a generally rectangular cross-sectional shape so as to eliminate the above-mentioned diffculty, Thus, the moulded container is reliably separated from the mould, and the mechanical strength of the grip integrally moulded with the bottle-shaped container is attained.

A bottle-shaped container 31 of this embodiment has a pair of recesses 34 depressed inwardly on the wall of the main body 32 of the container at both sides of the container body - which has a rectangular cross-sectional shape - so that a grip 37 is formed at the rear half of the container body 32. The recesses 34 are formed by tapered walls 36 depressed slowly towards a deepest body surface portion 35 at the centre thereof.

At least one side end of the grip 37 is formed with an oblique surface 38 which lies substantially at right angles with respect to an imaginary diagonal line 43 extending transversely of the container body between two opposite corners 44 and 45 thereof. With this configuration, an upper portion 40 and a lower portion 41 of the rear half of the container body 32 are externally projected.

Further, a plurality of reinforcing ribs 46 and 47 are formed by a depression 39 in the rear wall of the grip 37 to attain the necessary mechanical strength of the grip 37. The ribs 46 and 47 have the oblique surfaces 38 mentioned above.

In the configuration of this embodiment, the reinforcing ribs 46 and 47 are laterally formed on the rear wall of the grip 37. As a result, the grip 37 will not be deformed by the grasping force of a hand. In other words, it sufficiently resists the grasping force of the hand. Also, at least one side end of the grip 37 formed on the rear half of the container body 32 has an oblique surface 38 lying at a right angle with respect to the imaginary diagonal line 43. The opposing surfaces of a blowing mould for moulding the bottle-shaped container is disposed on the diagonal line 43, and the clamping or separating direction of the mould 42 is directed in a direction perpendicularly crossing the diagonal line so that the grip 37 will not be engaged when the moulded bottle-shaped container is separated from the mould.

It is to be noted that the depression 39 in the rear wall of the grip 37 has an inclined surface 48 adjacent the other side end of the grip 37, the surface 48 being so inclined with respect to the diagonal line that, when the moulded bottle-shaped container is separated from the mould, the moulded container is not held by the reinforcing rib 47.

Because the operating direction of the mould 42 when parting is directed as described above, with the parting line of the mould being along the line 43, a label can be bonded on the front surface 49 of the container body or can be printed directly on the front surface reliably and simply.

## Claims

1. A blow-moulded bottle-shaped container (31) of biaxially-oriented synthetic resin having an integrally-moulded neck (33) at the top of the main body (32) of the container, there being a pair of inwardly-depressed recesses (34) in the wall of the body (32) of the container at opposite sides therof with the minimum spacing between the recesses (34) being at their deepest parts (35) so that a portion of the wall between the recesses (34) forms a grip (37) as a result of the recesses, characterized in that at least one side end of the grip (37) has an oblique surface (38) which lies substantially at right angles with respect to an imaginary diagonal line (43) extending transversely of the generally rectangular-section container body (32) between two opposite corners (44, 45) thereof; that a plurality of reinforcing ribs (46, 47) are formed by a depression (39) in the rear wall of the grip (37); and that the other side end of the grip (37) has an inclined surface (48) adjacent to it, the inclined surface (48) being so inclined with respect to the diagonal line (43) that a mould (42) for moulding the container (31) can be separated in a direction perpendicularly crossing the diagonal line (43).

2. A container according to claim 1, characterized in that upper and lower portions of the rear half of the container project externally from the grip (37).

## Patentansprüche

1. Durch Blasformen hergestellter, flaschenförmiger Behälter (31) aus biaxial orientiertem Kunstharz, mit einem einstückig gegossenen Hals (33) am oberen Ende des Hauptkörpers (32) des Behälters, und mit einem Paar von nach innen eingewölbten Vertiefungen (34) in der Wand des Körpers (32) des Behälters, die an entgegengesetzten Seiten desselben angeordnet sind, wobei der kleinste Abstand zwischen den Vertiefungen (34) bei ihren tiefsten Partien (35) auftritt, so daß infolge der Vertiefungen ein Abschnitt der Wände zwischen den Vertiefungen (34) einen Griff (37) bildet, dadurch **gekennzeichnet,** daß mindestens ein Seitenende des Griffes (37) eine schräge Oberfläche (38) besitzt, die im wesentlichen rechtwinklig zu einer gedachten Diagonale (43) verläuft, die sich quer über den insgesamt einen Rechteckquerschnitt aufweisenden Behälterkörper (32) zwischen zwei entgegengesetzten Ecken (44, 45) desselben erstreckt; daß mehrere Verstärkungsrippen (46, 47) durch eine Vertiefung (39) in der Rückwand des Griffes (37) gebildet sind; und daß das andere Seitenende des Griffes (37) eine geneigte Oberfläche (48) neben der Vertiefung besitzt, wobei die geneigte Oberfläche (48) in Bezug auf die Diagonale (43) so abgeschrägt ist, daß eine Gußform (42) zum Gießen des Behälters (31) in einer Richtung geteilt werden kann, die die Diagonale (43) senkrecht durchquert.

2. Behälter nach Anspruch 1,
dadurch **gekennzeichnet,** daß der obere und der untere Abschitt der hinteren Hälfte des Behälters vom Griff (37) her nach außen hin vorspringt.

## Revendications

1. Récipient (31) en forme de bouteille moulé par soufflage en résine synthétique à orientation biaxiale, ayant un col (23) venu de moulage en haut du corps principal (32) du récipient, la paroi du corps (32) du récipient présentant deux évidements (34) en creux vers l'intérieur à des côtés opposés de celui-ci, l'écartement minimal entre les évidements (34) étant à leurs parties (35) les plus profondes de façon qu'une partie de la paroi située entre les évidements (34) forme une poignée (37) du fait de la présence des évidements, caractérisé en ce qu'au moins une extrémité latérale de la poignée (37) présente une surface oblique (38) qui s'étend sensiblement à angle droit par rapport à une ligne diagonale imaginaire (43) s'étendant transversalement au corps (32) du récipient de section globalement rectangulaire entre deux angles opposés (44, 45) de celui-ci ; en ce que plusieurs nervures (46, 47) de renfort sont formées par une cavité (39) dans la paroi arrière de la poignée (37) ; et en ce que l'autre extrémité latérale de la poignée (37) présente une surface inclinée (48) qui lui est adjacente, la surface inclinée (48) étant inclinée par rapport à la ligne diagonale (43) de manière qu'un moule (42) destiné au moulage du récipient (31) puisse être séparé dans une direction coupant perpendiculairement la ligne diagonale (43).

2. Récipient selon la revendication 1, caractérisé en ce que des parties supérieure et inférieure de la moitié arrière du récipient font saillie extérieurement de la poignée (37).
